# FASCICULE DE BREVET EUROPEEN

(11) **EP 1 240 040 B1**
(45) Date de publication et mention de la délivrance du brevet: **18.03.2009**
(21) Numéro de dépôt: 01982528.0
(22) Date de dépôt: 19.10.2001
(51) Int. Cl.: B60H 1/00

(54) **APPAREILS DE CHAUFFAGE, DE VENTILATION ET/OU DE CLIMATISATION**
HEIZUNGS-, BELÜFTUNGS- UND/ODER KLIMAANLAGEN
HEATING, VENTILATING AND/OR AIR CONDITIONING APPLIANCES

(30) Priorité: 20.10.2000 DE 10052134
(43) Date de publication de la demande: 18.09.2002
(73) Titulaire: Valeo Klimasysteme GmbH, 96476 Rodach (DE)
(72) Inventeur: ABOUCHAAR, Nicolas, 96476 Bad Rodach (DE)
(74) Mandataire: Lemaire, Marc
(86) Numéro de dépôt international: PCT/FR2001/003264
(87) Numéro de publication internationale: WO 2002/032703

(56) Documents cités:
- EP-A- 0 751 021
- DE-A- 19 743 656
- US-A- 5 309 731
- US-A- 6 002 105

## Description

La présente invention concerne un appareil de chauffage, de ventilation et/ou de climatisation, et en particulier un appareil de chauffage, de ventilation et/ou de climatisation pour un véhicule. De manière classique, un tel appareil dispose d'une soufflante pour acheminer de l'air à travers appareil et ensuite dans l'habitacle du véhicule. Pour assurer un chauffage de l'air, on prévoit habituellement un échangeur de chaleur pour chauffage, qui peut être parcouru par exemple par le fluide servant au refroidissement du moteur. En général dans ce contexte il faut faire la différence d'une part entre une commande fluidique et d'autre part une commande pneumatique, des commandes dites mixtes étant aussi connues. Au cas où le véhicule dispose également d'une fonction de climatisation, il est en outre prévu un évaporateur optionnel, qui est habituellement monté en amont de l'échangeur de chaleur pour chauffage, du point de vue de la technique des fluides.

Ces dernières années, de tels appareils ont été de plus également pourvus d'un dispositif de chauffage supplémentaire, par exemple pour pouvoir assurer un chauffage plus rapide de l'habitacle du véhicule au moment du départ. De tels appareils de chauffage supplémentaires peuvent être des dispositifs de chauffage électriques, des appareils de chauffage à combustion et similaires, des régulateurs thermiques à changement d'état pouvant aussi être utilisés. Un exemple est illustré dans le document US 6002105 comprenant les caractéristiques de la première partie de la revendication 1. D'habitude, un tel dispositif de chauffage supplémentaire est intégré dans de tels appareils conjointement avec l'échangeur de chaleur pour chauffage servant de corps de chauffe, le dispositif de chauffage supplémentaire étant habituellement monté directement en aval de l'échangeur de chaleur pour chauffage, du point de vue de la technique des fluides.

Le montage du dispositif de chauffage supplémentaire directement en aval était jusqu'à présent considéré comme particulièrement avantageux, en particulier dans le cas où le dispositif de chauffage supplémentaire est équipé de ce qu'on appelle des résistances à coefficient de température positif. En général, le dispositif de chauffage supplémentaire sert donc à réchauffer l'air qui est passé par l'échangeur de chaleur pour chauffage, afin de pouvoir satisfaire aux exigences techniques de climatisation dans l'habitacle du véhicule.

Les appareils de chauffage, ventilation et/ou climatisation connus de ce type présentent toutefois, en ce qui concerne le dispositif de chauffage supplémentaire, des pertes considérables, car en raison de la proximité 'spatiale de l'échangeur de chaleur pour chauffage et du dispositif de chauffage supplémentaire, l'échangeur de chaleur pour chauffage est chauffé par transfert de rayonnement thermique. Les appareils connus présentent en outre un mode de réponse relativement lent, également dépendant de manière déterminante de l'interaction entre l'échangeur de chaleur pour chauffage et le dispositif de chauffage supplémentaire. Finalement, il est nécessaire, dans les appareils de chauffage, ventilation et/ou climatisation connus de faire appel à une puissance de soufflage considérable, afin de pouvoir guider l'air à travers les différents dispositifs de traitement de l'air, et l'on souhaite dans ce contexte pouvoir chauffer l'habitacle du véhicule avec une faible puissance de soufflage.

L'objet de la présente invention est donc de proposer un appareil de chauffage, ventilation et/ou climatisation, en particulier pour un véhicule, qui élimine les inconvénients susmentionnés. Un autre objet de la présente invention consiste à fournir un appareil de chauffage, ventilation et/ou climatisation, qui permette, pour une exigence de faible encombrement, une utilisation multiple et une amélioration du rendement dans au moins certains modes de fonctionnement.

Conformément à l'invention, les objets ci-dessus sont réalisés par un appareil de chauffage, ventilation et/ou climatisation ayant les caractéristiques de la revendication 1, des perfectionnements de l'appareil selon l'invention étant exposés dans les revendications dépendantes.

L'invention propose un appareil de chauffage, ventilation et/ou climatisation avec les caractéristiques de la revendication 1.

Du fait que l'invention permet que le dispositif de chauffage supplémentaire puisse être alimenté essentiellement en air non traité, tout au moins en air qui n'est pas passé par l'échangeur de chaleur pour chauffage, il est possible de guider, dans l'habitacle du véhicule, de l'air chauffé par le dispositif de chauffage supplémentaire, avec une faible puissance de soufflage. L'appareil selon l'invention permet ainsi, en plus des voies d'écoulément d'air usuelles, de disposer dans l'appareil d'autres voies ou tout au moins de voies d'écoulement d'air partielles, dans lesquelles l'air est guidé à travers le dispositif de chauffage supplémentaire, mais pas à travers l'échangeur de chaleur pour chauffage, le chemin d'écoulement d'air usuel à travers l'échangeur de chaleur pour chauffage puis le dispositif de chauffage supplémentaire étant évidemment aussi possible. Un autre avantage réside dans le fait que le dispositif de chauffage supplémentaire peut être plus léger et/ou plus petit, car les exigences relatives aux pertes de pression qu'il entraîne sont moins importantes. En outre, avec le concept de l'invention avec les moyens de commande du courant d'air existants on peut obtenir un fonctionnement élargi, si l'on accouple par exemple la commande du dispositif de chauffage supplémentaire à chacun des moyens de commande du courant d'air.

Dans une forme de réalisation préférée, le dispositif de chauffage supplémentaire est branché en parallèle au moins partiellement par rapport à l'échangeur de chaleur pour chauffage, du point de vue de la technique des fluides. Autrement dit, on peut prévoir selon l'invention des moyens de commande du courant d'air de telle sorte qu'une partie ou que la totalité de l'air alimenté par la soufflante soit guidée devant l'échangeur de chaleur pour chauffage et à travers au moins une section du dispositif de chauffage supplémentaire. Un tel mode de fonctionnement est par exemple approprié pour une fonction de chauffage auxiliaire intégrée à l'appareil, car par exemple seulement le dispositif de chauffage supplémentaire, qui peut également fournir une puissance de chauffage satisfaisante, est traversé par le courant, de sorte qu'une perte de pression à travers l'échangeur de chaleur pour chauffage n'a pas lieu. En outre, cette forme de réalisation est avantageuse en ce sens que plus de niveaux de température que dans le branchement en série habituel de l'évaporateur, de l'échangeur de chaleur pour chauffage et du dispositif de chauffage supplémentaire sont possibles.

De manière avantageuse, le dispositif de chauffage supplémentaire est monté en parallèle, du point de vue de la technique des fluides, au moins partiellement par rapport à l'échangeur de chaleur pour chauffage. Autrement dit, l'échangeur de chaleur pour chauffage et le dispositif de chauffage supplémentaire sont disposés de telle sorte que l'air puisse passer au choix simultanément et/ou successivement à travers au moins une section respective de l'échangeur de chaleur pour chauffage et/ou du dispositif de chauffage supplémentaire.

Dans une forme de réalisation préférée, le dispositif de chauffage supplémentaire peut être parcouru effectivement au moins par sections dans des directions essentiellement opposées. Grâce à cette configuration, de l'air peut par exemple passer à travers une section du dispositif de chauffage supplémentaire, sans avoir passé par l'échangeur de chaleur pour chauffage, tandis que d'autre part de l'air qui est passé par l'échangeur de chaleur pour chauffage peut passer par une autre section, l'air qui peut avoir passé ou non par l'échangeur de chaleur pour chauffage pouvant également passer dans une première direction à travers le dispositif de chauffage supplémentaire, une partie de cet air pouvant ensuite encore passer à travers le dispositif de chauffage supplémentaire dans une direction opposée, afin d'y être encore réchauffée.

De manière avantageuse, le dispositif de chauffage supplémentaire s'étend essentiellement parallèlement à l'échangeur de chaleur pour chauffage ou essentiellement perpendiculairement à la direction d'écoulement qui s'y établirait en cas de défaillance du dispositif de chauffage supplémentaire. Une orientation parallèle peut permettre par exemple de former une surface globale essentiellement continue constituée par l'échangeur de chaleur pour chauffage et le dispositif de chauffage supplémentaire, laquelle indique comme vecteur normal le vecteur d'écoulement de l'air, un certain recouvrement de l'échangeur de chaleur pour chauffage et du dispositif de chauffage supplémentaire étant également possible.

En variante de l'agencement parallèle, le dispositif de chauffage supplémentaire peut également s'étendre perpendiculairement à l'échangeur de chaleur pour chauffage ou être prévu essentiellement parallèlement à la direction d'écoulement qui s'y établirait en cas de défaillance du dispositif de chauffage supplémentaire. Cet agencement permet par exemple de disposer d'une zone de mélange d'air chaud entre l'échangeur de chaleur pour chauffage et le dispositif de chauffage supplémentaire, dans laquelle les écoulements d'air respectifs peuvent se mélanger de manière optimale, que ce soit en utilisant un moyen de commande supplémentaire du courant d'air ou par alimentation de cette chambre de mélange en air davantage refroidi ou en air frais.

En plus des relations perpendiculaire et parallèle entre l'échangeur de chaleur pour chauffage et le dispositif de chauffage supplémentaire, il peut aussi être avantageux de former le dispositif de chauffage supplémentaire et l'échangeur de chaleur pour chauffage suivant une configuration essentiellement en forme de V, une configuration essentiellement en forme de N pouvant être réalisée en particulier dans le cas de la présence d'un évaporateur optionnel, à partir de l'évaporateur, de l'échangeur de chaleur pour chauffage et du dispositif de chauffage supplémentaire.

L'agencement essentiellement en forme de V entre l'échangeur de chaleur pour chauffage et le dispositif de chauffage supplémentaire permet, d'une manière particulièrement simple, de représenter des voies d'air les plus diverses, comme par exemple une première voie d'air, dans laquelle l'air passe successivement à travers l'échangeur de chaleur pour chauffage et ensuite à travers le dispositif de chauffage supplémentaire ; une voie dans laquelle l'air passe simultanément ou parallèlement à travers l'échangeur de chaleur pour chauffage et le dispositif de chauffage supplémentaire ou au moins une partie du dispositif de chauffage supplémentaire ; ainsi que des voies d'air, dans lesquelles l'air s'écoule au choix à travers l'échangeur de chaleur pour chauffage ou une partie du dispositif de chauffage supplémentaire, des combinaisons des différentes voies d'écoulement d'air étant bien évidemment aussi possibles.

Dans la configuration en forme de N formée par l'agencement de l'évaporateur, de l'échangeur de chaleur pour chauffage et du dispositif de chauffage supplémentaire, il est possible, en plus du passage en forme de S de l'air à travers tous les dispositifs de traitement de l'air, à chaque fois d'évacuer ou d'acheminer de l'air entre deux branches, afin de contourner de manière correspondante un ou plusieurs des dispositifs de traitement de l'air.

Dans une autre forme de réalisation préférée, le dispositif de chauffage supplémentaire est monté mobile dans l'appareil, en particulier de façon à pouvoir pivoter entre un agencement essentiellement parallèle et un agencement essentiellement perpendiculaire par rapport à l'échangeur de chaleur pour chauffage, respectivement par rapport à l'écoulement d'air se présentant au niveau du dispositif de chauffage supplémentaire. La configuration pivotante du dispositif de chauffage supplémentaire peut ainsi permettre d'une part de disposer le dispositif de chauffage supplémentaire seulement en cas de besoin dans la voie d'air, tandis qu'il ne cause pratiquement aucune résistance à l'écoulement en cas de non utilisation, et d'autre part le pivotement permet de mettre en oeuvre différents modes de fonctionnement. A cet effet, le dispositif de chauffage supplémentaire pourrait également être prévu avec une forme courbe ou coudée, afin d'améliorer encore les propriétés d'écoulement.

Outre le montage pivotant, un décalage ou un mouvement de pivotement et de décalage combinés du dispositif de chauffage supplémentaire sont évidemment aussi possibles. Dans le cas d'un simple mouvement de décalage, il est par exemple possible de faire varier la proportion du dispositif de chauffage supplémentaire qui peut être parcourue par l'air qui n'est pas passé par l'échangeur de chaleur pour chauffage.

Finalement, on préfère que le dispositif de chauffage supplémentaire soit un dispositif de chauffage électrique, en particulier un dispositif qui comprenne au moins un élément de chauffage à CTP. Dans chaque cas, il est possible d'utiliser le dispositif de chauffage supplémentaire pour le chauffage dédié d'une sortie éventuellement spéciale, par exemple pour pouvoir réchauffer des plats ou des boissons. D'autres avantages et caractéristiques de l'invention résultent en outre de la description suivante, donnée uniquement à titre d'exemple, de quelques formes de réalisation actuellement préférées, qui se réfère aux dessins d'accompagnement, dans lesquels :
- la figure 1: illustre, en coupe schématique, une première forme de réalisation préférée de l'appareil de chauffage, ventilation et/ou climatisation selon l'invention ;
- la figure 2: illustre une variante de réalisation, ;
- la figure 3: illustre un perfectionnement de la forme de réalisation illustrée dans la figure 2 ;
- la figure 4: illustre encore un autre perfectionnement des formes de réalisation illustrées dans les figures 2 et 3 ;
- la figure 5: illustre encore une autre forme de réalisation d'un appareil de chauffage, ventilation et/ou climatisation selon l'invention en vue en coupe schématique;
- les figures 6 à 8: illustrent d'autres variantes de réalisation préférées.

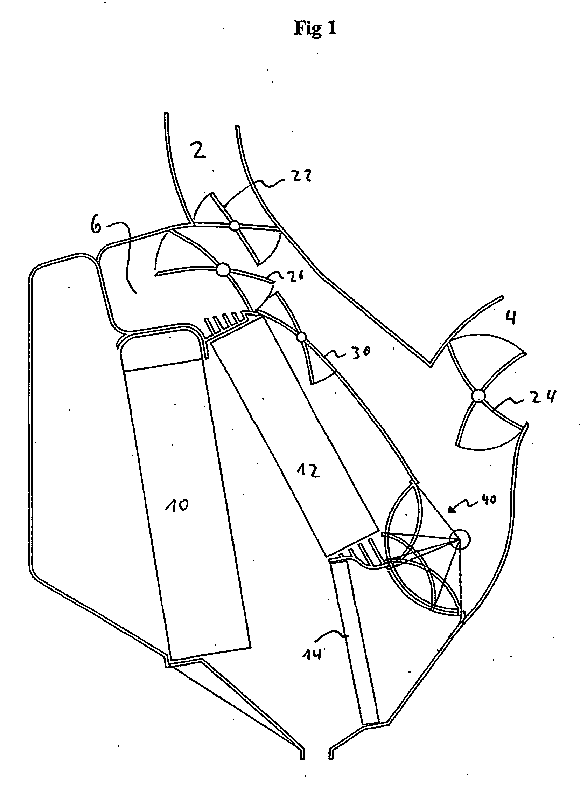

La figure 1 illustre une vue en coupe d'un appareil de chauffage, ventilation et/ou climatisation en tant que forme de réalisation préférée de la présente invention. Cet appareil dispose d'une soufflante non illustrée, qui peut acheminer de l'air du côté gauche, de sorte que celui-ci, après traitement par les dispositifs de traitement de l'air 10, 12, 14 puisse être diffusé vers différents canaux de sortie d'air 2, 4, 6. Dans la forme de réalisation illustrée, un canal de sortie d'air 2 est prévu pour la région du pare-brise, un canal de sortie d'air 4 est prévu pour la région des diffuseurs d'air dans le tableau de bord et un canal de sortie d'air 6 est prévu pour la région des pieds, le canal de sortie d'air 6 s'étendant essentiellement vers l'intérieur dans le plan du dessin afin de pouvoir être guidé directement devant l'appareil vers la région des pieds. L'appareil de chauffage, ventilation et/ou climatisation illustré comprend un évaporateur optionnel 10, qui peut être alimenté de manière usuelle en soi au moyen d'un compresseur, afin de pouvoir refroidir l'air alimenté par la soufflante.

Du point de vue de la technique des fluides, l'évaporateur 10 est monté en aval d'un échangeur de chaleur pour chauffage 12, un dispositif de chauffage supplémentaire 14 pouvant être monté en parallèle et/ou en aval par rapport à celui-ci. Dans la forme de réalisation illustrée, le dispositif de chauffage supplémentaire 14 est un dispositif de chauffage électrique, qui se compose de ce qu'on appelle des résistances à coefficient de température positif (CTP). Comme on peut le voir, l'air sortant de l'évaporateur 10 peut simultanément alimenter l'échangeur de chaleur pour chauffage 12 et le dispositif de chauffage supplémentaire 14, des moyens de commande du courant d'air, sous forme de vannes à papillon et/ou de vannes à coquille, de dispositifs à jalousie et similaires, bien que non illustrés, pouvant être prévus dans la zone directement adjacente à l'évaporateur 10, afin d'orienter l'air sortant de l'évaporateur 10 vers l'échangeur de chaleur pour chauffage 12 ou vers le dispositif de chauffage supplémentaire 14, ou afin de modifier au moins par sections l'alimentation de l'échangeur de chaleur pour chauffage 12 et/ou du dispositif de chauffage supplémentaire 14.

Comme on peut le déduire de la représentation de la figure 1, le dispositif de chauffage supplémentaire 14 ne se trouve donc plus en aval de l'échangeur de chaleur pour chauffage 12 du point de vue de la technique des fluides, mais il se trouve au contraire dans la voie servant autrement à l'alimentation en air frais. Le passage de l'air à travers l'échangeur de chaleur pour chauffage 12 et/ou le dispositif de chauffage supplémentaire 14 s'effectue dans la forme de réalisation illustrée à travers des moyens de commande successifs 30, 40 du courant d'air. Dans la forme de réalisation illustrée, un moyen de commande 40 du courant d'air sous forme d'une vanne à coquille, qui peut libérer ou fermer au choix la section transversale se trouvant derrière elle, (des positions intermédiaires telles qu'illustrées étant également possibles), se trouve, du point de vue de la technique des fluides, derrière le dispositif de chauffage supplémentaire 14. Les moyens de commande 30, 40 du courant d'air peuvent en particulier fonctionner comme des vannes mélangeuses, qui peuvent être aussi accouplées les unes aux autres.

Du point de vue de la technique des fluides, deux passages d'air qui peuvent être commandés chacun par les moyens de commande 30, 40 du courant d'air, se trouvent derrière l'échangeur de chaleur pour chauffage 12. Le moyen de commande 40 du courant d'air, qui peut commander le passage d'air à travers le dispositif de chauffage supplémentaire 14, permet, comme illustré, de fermer la section inférieure de l'espace se raccordant à l'échangeur de chaleur pour chauffage 12, tandis que le moyen de commande 30 du courant d'air, conçu sous forme de vanne à papillon, peut ouvrir ou fermer une section supérieure de cet espace. Après le passage de l'air devant le moyen de commande du courant d'air 30 et/ou 40, l'air traité en conséquence peut être réparti dans les différents canaux de sortie d'air 2, 4, 6 par des moyens de commande 22, 24, 26 du courant d'air respectifs, des canaux de sortie d'air 2, 4, 6 différents pouvant en particulier être alimentés en air ayant été traité par des dispositifs de traitement de l'air respectifs différents 10, 12, 14, ou des combinaisons de ceux-ci.

A titre de modes opératoires illustratifs de l'appareil de chauffage, ventilation et/ou climatisation illustré dans la figure 1, on va décrire d'une part un mode dans lequel l'échangeur de chaleur pour chauffage 12 est encore froid, mais l'on souhaite réduire la buée formée sur le pare-brise, tandis que d'autre part, on décrit aussi un autre mode, dans lequel l'échangeur de chaleur pour chauffage 12 a atteint sa température de fonctionnement et l'on souhaite une température plus élevée dans la région des pieds qu'au niveau du tableau de bord.

Dans le premier mode mentionné, les moyens de commande 30, 40 du courant d'air ferment l'espace qui se trouve directement derrière l'échangeur de chaleur pour chauffage 12, de sorte que l'air ne puisse pas passer à travers l'échangeur de chaleur pour chauffage 12. Au contraire, tout l'air est guidé à travers le dispositif de chauffage supplémentaire 14 et est chauffé avec celui-ci. Dans la mesure où le dispositif de chauffage supplémentaire 14 dans la forme de réalisation illustrée est un appareil de chauffage électrique, une réponse rapide peut être obtenue nettement avant l'obtention de la température de fonctionnement du moteur, et en outre, dans la forme de réalisation illustrée, il existe l'avantage qu'il ne se produit pas de perte de pression par le passage à travers l'échangeur de chaleur pour chauffage 12. Après avoir été chauffé à travers le dispositif de chauffage supplémentaire 14, l'air va passer devant le moyen de commande 40 du courant d'air, dans la position ouverte existant pour cette voie d'air, et, les moyens de commande 24, 26 du courant d'air étant fermés, sera guidé exclusivement vers le canal de sortie d'air 2, qui peut déboucher directement en dessous du pare-brise, pour ainsi assurer une réduction de la buée, et ce avant que le moteur propre au véhicule puisse fournir la puissance thermique suffisante pour cela. Au fur et à mesure que la puissance de chauffage disponible de l'échangeur de chaleur pour chauffage 12 augmente, le moyen de commande 40 du courant d'air peut être successivement ouvert et le moyen de commande 30 du courant d'air peut être successivement fermé.

Dans l'autre mode de fonctionnement mentionné, dans lequel on souhaite de l'air plus chaud dans la région des pieds et de l'air moyennement chaud dans la région des diffuseurs, le moyen de commande 30 du courant d'air peut se trouver dans la position ouverte, tandis que le moyen de commande 40 du courant d'air bloque la section inférieure de l'espace qui se raccorde à l'échangeur de chaleur pour chauffage 12. Ainsi, l'air est réchauffé à travers l'échangeur de chaleur pour chauffage 12, qui se trouve dans ce cas à la température de fonctionnement, et il est évacué vers le haut. Par des réglages correspondants des moyens de commande 22, 24 et 26 du courant d'air, le canal de sortie d'air est fermé dans ce mode de fonctionnement, de sorte que la quasi-totalité de l'air réchauffé dans l'échangeur de chaleur pour chauffage 12 est disponible pour le canal de sortie vers les pieds 6. Dans la mesure où le dispositif de chauffage supplémentaire 14 peut être alimenté en air parallèlement à l'échangeur de chaleur pour chauffage 12, une partie de l'air peut être réchauffée par celui-ci, afin de passer au niveau du moyen de commande 40 du courant d'air ouvert vers le canal de sortie 4, qui est également ouvert par le biais de son moyen de commande 24 du courant d'air associé.

Evidemment, une pluralité de modes de fonctionnement peuvent être représentés avec l'agencement illustré, les différents états, en particulier de l'échangeur de chaleur pour chauffage 12 pouvant être pris en compte. On peut mentionner que grâce à l'agencement en parallèle du point de vue de la technique des fluides de l'échangeur de chaleur pour chauffage 12 et d'au moins une partie ou une section du dispositif de chauffage supplémentaire 14, plusieurs voies d'écoulement d'air sont possibles, des pertes de pression d'une part et des pertes de chaleur par chauffage par rayonnement d'autres pièces pouvant ainsi être évitées. Finalement, il convient encore de mentionner que l'agencement du dispositif de chauffage supplémentaire 14 dans la voie d'air autrement prévue pour l'alimentation en air frais ne constitue aucun inconvénient pour celui-ci, car le mode de réponse dans les appareils de chauffage supplémentaires habituels est rapide et les masses mises en jeu sont faibles.

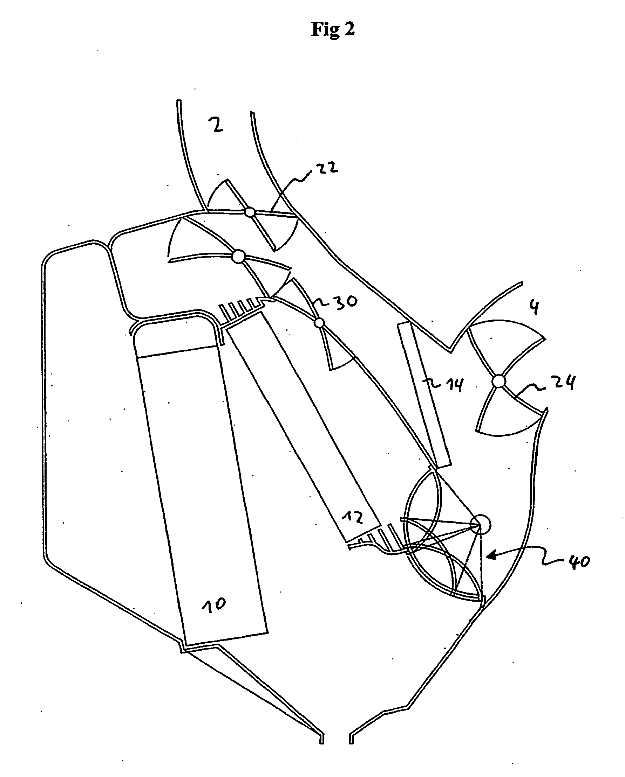

La figure 2 illustre, dans une vue similaire à la figure 1, une variante de réalisation préférée, dans laquelle la voie d'écoulement classique est représentée d'une part avec le montage en série d'un évaporateur, d'un échangeur de chaleur et d'un dispositif de chauffage supplémentaire, et d'autre part le passage selon l'invention à travers le dispositif de chauffage supplémentaire 14 d'air n'ayant pas passé à travers l'échangeur de chaleur pour chauffage, par des parois de séparation correspondantes et des moyens de commande du courant d'air. - Comme dans le cas de la forme de réalisation illustrée dans la figure 1, l'appareil de chauffage, ventilation et/ou climatisation de cette forme de réalisation comprend un soufflante non illustrée, un évaporateur optionnel 10 servant à la climatisation, ainsi qu'un échangeur de chaleur pour chauffage 12. De même que dans la forme de réalisation illustrée dans la figure 1, trois voies de sortie d'air 2, 4, 6 sont prévues avec les moyens de commande 22, 24, 26 du courant d'air respectifs. De même que dans la forme de réalisation illustrée dans la figure 1, l'espace se raccordant à l'échangeur de chaleur pour chauffage 12 dispose de deux moyens de commande 30, 40 du courant d'air, qui peuvent ouvrir une région supérieure ou inférieure de cet espace. Le dispositif de chauffage supplémentaire 14 se trouve, comme dans la forme de réalisation illustrée dans la figure 1, dans une voie d'air, qui peut fournir de l'air frais ou de l'air froid, mais est maintenant disposé au-dessus du canal de sortie d'air 4.

La forme de réalisation illustrée dans la figure 2 permet, sous forme de modes de fonctionnement illustratifs, de fournir de l'air réchauffé par le dispositif de chauffage supplémentaire à la voie de sortie d'air 2, comme le permet également la forme de réalisation illustrée dans la figure 1. Contrairement à la forme de réalisation illustrée dans la figure 1 cependant, d'autres modes de fonctionnement sont possibles, à savoir par exemple un mode dans lequel l'air pour la voie de sortie d'air 4 est passé successivement par l'évaporateur 10, l'échangeur de chaleur pour chauffage 12 et le dispositif de chauffage supplémentaire 14, ou d'autre part, en tant qu'autre exemple, un mode de fonctionnement dans lequel à la fois la zone des pieds et la zone du pare-brise sont alimentées en air réchauffé par le dispositif de chauffage supplémentaire 14, tandis que de l'air refroidi ou de l'air frais peut être émis par les diffuseurs dans la région du tableau de bord. Finalement, la forme de réalisation illustrée permet également un mode de fonctionnement dans lequel l'air s'écoule en partie à travers l'échangeur de chaleur pour chauffage 12 et simultanément à travers au moins une partie du dispositif de chauffage supplémentaire 14, afin d'être mélangé par le biais du moyen de commande 30 du courant d'air, de sorte que dans ce mode le moyen de commande 30 du courant d'air peut servir de vanne d'air de mélange pour deux écoulements d'air chauffés différemment.

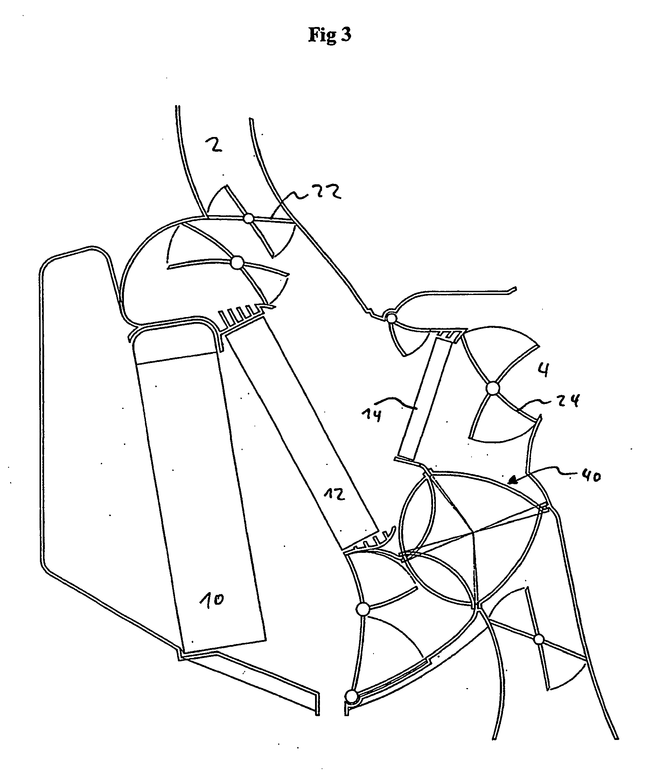

La forme de réalisation illustrée dans la figure 3 est un perfectionnement de la forme de réalisation illustrée dans la figure 2, les constituants correspondants ayant été décrits dans les formes de réalisation précédentes étant pourvus de numéros de référence correspondants et n'étant pas traités à nouveau en détail. Contrairement à la forme de réalisation illustrée dans la figure 2, le dispositif de chauffage supplémentaire 14 ne s'étend plus essentiellement parallèlement à l'échangeur de chaleur pour chauffage 12, mais il forme avec celui-ci une configuration essentiellement en forme de V, où toutefois au lieu d'un contact des deux branches, il est prévu un espacement qui permet un passage d'air devant le dispositif de chauffage supplémentaire 14. Autrement dit, il existe ainsi la possibilité, dans cette forme de réalisation, de prévoir un montage en parallèle de trois courants d'air, à savoir d'une part un courant d'air qui passe à travers l'échangeur de chaleur pour chauffage 12, un courant d'air qui passe à travers le dispositif de chauffage supplémentaire 14 et un courant d'air qui ne passe à travers aucun dispositif de chauffage de l'air 12, 14. On doit mentionner dans cette forme de réalisation que comme dans la forme de réalisation illustrée dans la figure 2, le dispositif de chauffage supplémentaire 14 selon l'invention est parcouru par un courant dans des directions différentes dans des modes de fonctionnement différents. En particulier, avec la forme de réalisation illustrée, qui prévoit également un canal de sortie d'air pour la région du fond 6', on peut représenter ainsi à titre d'exemple les modes de fonctionnement suivants .
- un chauffage successif de l'air à travers l'échangeur de chaleur pour chauffage 12 et le dispositif de chauffage supplémentaire 14, pour une diffusion dans la région du fond par le canal de sortie 6' ou au niveau du tableau de bord par le biais du canal de sortie 4 ;
- un chauffage de l'air par le passage parallèle à travers à la fois l'échangeur de chaleur pour chauffage 12 et le dispositif de chauffage supplémentaire 14 pour une diffusion par exemple par le biais du canal:de sortie d'air 2 jusqu'au pare-brise, une sortie d'air frais dans la région du fond et/ou au niveau du tableau de bord étant optionnellement possible ;
- une pluralité d'autres configurations de voies d'air sont possibles et apparaîtront aisément à l'homme de l'art à l'examen de la figure.

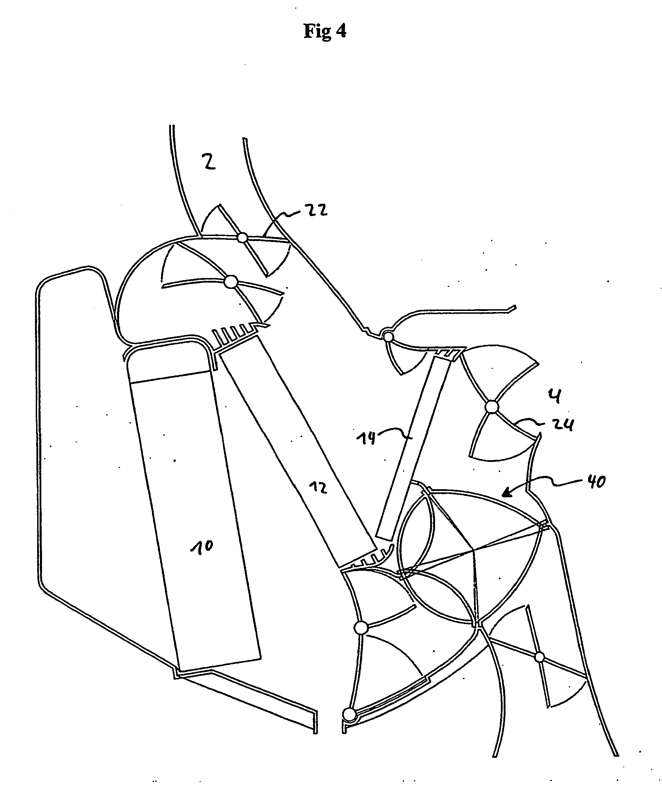

La figure 4 illustre un appareil similaire à celui illustré dans la figure 3, sauf que le dispositif de chauffage supplémentaire 14 s'étend sur toute la largeur de la voie d'air frais et peut être divisé en différentes sections par le moyen de commande 40 du courant d'air. L'évaporateur 10, l'échangeur de chaleur pour chauffage 12 et le dispositif de chauffage supplémentaire 14 forment ainsi une configuration essentiellement en forme de N avec une possibilité de guidage des voies d'air polyvalente, similaire aux modes décrits en ce qui concerne les formes de réalisation susmentionnées. Bien que cela ne soit pas illustré, l'homme de l'art reconnaîtra que le dispositif de chauffage supplémentaire 14 pourrait aussi avoir une largeur moins grande, comme illustré par exemple dans la figure 3, de sorte qu'il puisse être déplacé d'avant en arrière à la façon d'un tiroir pour permettre par exemple le passage d'air frais n'entraînant pratiquement aucune perte de pression.

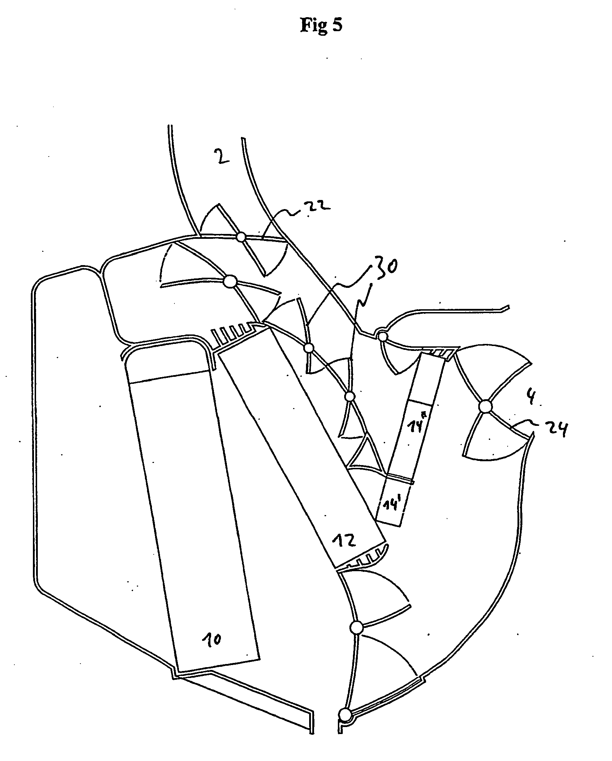

Dans la forme de réalisation illustrée dans la figure 5, le dispositif de chauffage supplémentaire 14 peut être positionné de manière similaire à la figure 4 éventuellement par déplacement, et dispose, dans une position, de deux sections désaccouplées l'une de l'autre 14', 14". Avec cette forme de réalisation, on peut représenter les voies d'écoulement dans l'appareil essentiellement comme elles ont été décrites en tenant compte des formes de réalisation précédentes, l'air qui n'est pas passé par le corps de chauffe 12 pouvant être réchauffé au moyen du dispositif de chauffage supplémentaire 14. De plus, cette forme de réalisation permet toutefois aussi de fournir de l'air particulièrement chaud par exemple dans la région du pare-brise, en faisant passer l'air tout d'abord à travers l'échangeur de chaleur pour chauffage 12, puis par la première section 14' du dispositif de chauffage supplémentaire et après un coudage, encore à travers la deuxième section 14 " du dispositif de chauffage supplémentaire 14, dans la direction essentiellement inverse.

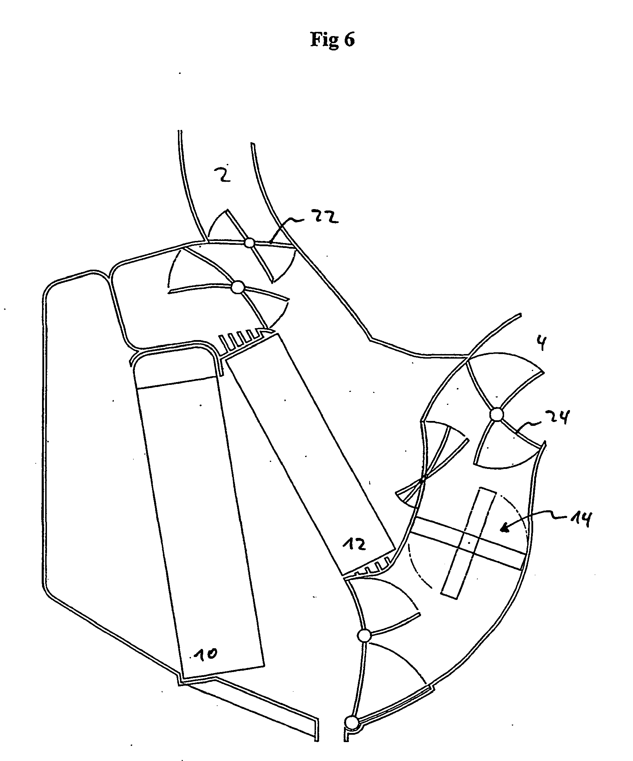

La figure 6 illustre encore une autre forme de réalisation préférée d'un appareil de chauffage, ventilation et/ou climatisation selon l'invention, dans lequel le dispositif de chauffage supplémentaire 14, comme dans la forme de réalisation illustrée dans la figure 1, peut se trouver essentiellement en dessous ou dans la direction du prolongement de l'échangeur de chaleur pour chauffage 12. Dans la forme de réalisation illustrée ici, le dispositif de chauffage supplémentaire 14 est disposé pivotant autour d'un axe médian, de sorte que d'une part, la configuration illustrée essentiellement dans la figure 1 puisse être représentée, tandis que d'autre part, on puisse également agencer le dispositif de chauffage supplémentaire 14 de telle sorte qu'il s'étende essentiellement dans la direction de l'écoulement existant, de sorte que la résistance à l'écoulement soit nettement réduite.

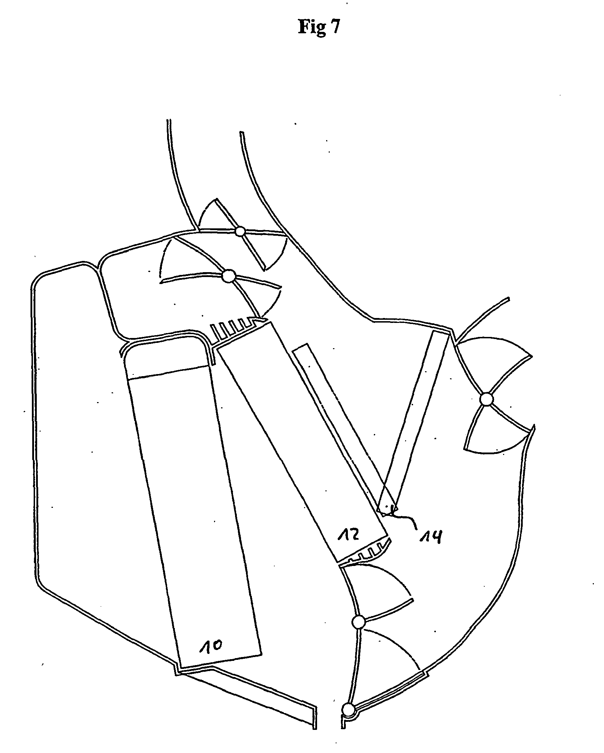

La figure 7 illustre une forme de réalisation dans laquelle le dispositif de chauffage supplémentaire 14 est disposé, du point de vue de la technique des fluides, derrière le canal de sortie 4 de manière à pouvoir pivoter entre une position, dans laquelle le dispositif de chauffage supplémentaire 14 s'étend parallèlement à l'échangeur de chaleur pour chauffage 12 pratiquement contre celui-ci et une position, dans laquelle il s'étend jusqu'à la voie d'air froid et une position dans laquelle il s'étend transversalement à la voie d'air froid. Cette forme de réalisation permet ainsi d'une part, dans la première position mentionnée, un fonctionnement usuel, c'est-à-dire avec un passage successif à travers l'échangeur de chaleur pour chauffage et le dispositif de chauffage supplémentaire et d'autre part, dans la deuxième position mentionnée une alimentation en parallèle ou sélective en air par le dispositif de chauffage supplémentaire 14 et l'échangeur de chaleur pour chauffage 12.

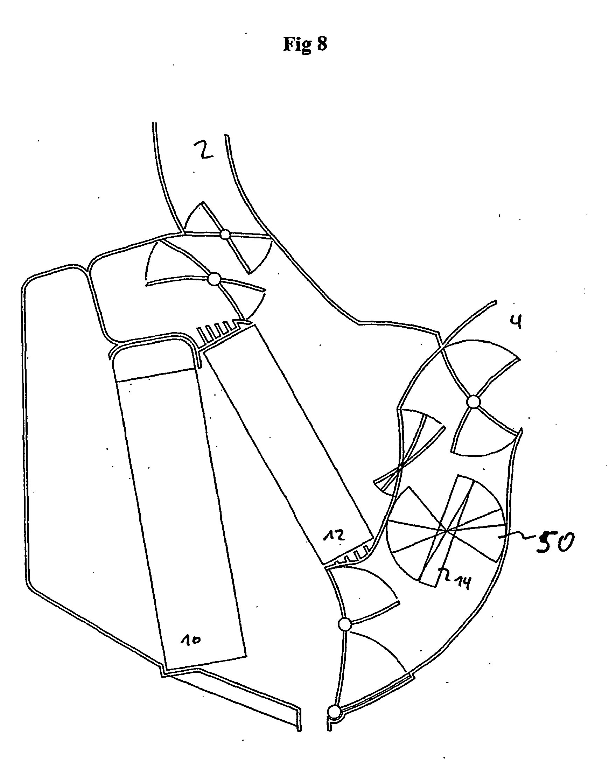

La figure 8 illustre finalement une forme de réalisation préférée, dans laquelle le dispositif de chauffage supplémentaire 14 s'étend essentiellement dans la direction de l'écoulement dans la voie d'air froid. Bien que dans l'exemple de réalisation illustré, le dispositif de chauffage supplémentaire soit représenté plan et plat, l'homme de l'art pourra reconnaître qu'une configuration courbée ou coudée peut être avantageuse. Afin de pouvoir permettre au besoin le passage du courant à travers le dispositif de chauffage supplémentaire, il est prévu en outre une vanne à coquille double 50, qui peut donner lieu au passage d'une partie ou de la totalité de l'écoulement d'air à travers le dispositif de chauffage supplémentaire 14.

Dans l'ensemble, on peut ainsi réaliser avec les formes de réalisation décrites diverses configurations d'écoulement dans l'appareil, les moyens de commande du courant d'air existant habituellement dans un appareil pouvant éventuellement être complétés lors -de leur utilisation par d'autres moyens de commande du courant d'air. Ainsi, par exemple, la commande du ou des moyens de courant d'air qui adoptent la fonction.d'une vanne de mélange, permet de tenir compte de la puissance de chauffage disponible de l'échangeur de chaleur pour chauffage, de la température extérieure, ainsi que d'autres paramètres techniques de climatisation, les pertes de pression existant dans les voies d'air respectives pouvant être optimisées en fonction du mode de fonctionnement. Par exemple, il est possible, dans une phase de démarrage, d'isoler l'échangeur de chaleur pour chauffage de la circulation d'air, de sorte que celui-ci puisse être amené plus rapidement à la température de fonctionnement, tandis que la puissance de chauffage nécessaire peut être fournie au moins par transition par le dispositif de chauffage supplémentaire.

Bien que cela ne soit pas illustré, il est par exemple aussi possible de configurer le fonctionnement du dispositif de chauffage supplémentaire en fonction de la position, par exemple on pourrait envisager une mise en contact du dispositif de chauffage supplémentaire 14 dans la forme de réalisation illustrée dans la figure 6 uniquement dans la position dans laquelle un passage du courant à travers celui-ci est assuré. De plus, outre le mouvement de pivotement autour d'un axe médian, on pourrait aussi envisager d'autres mouvements quelconques, par exemple autour d'un axe décentré ou aussi un mouvement de translation ou un mouvement de pivotement-glissement combiné, comme également un mouvement dans une direction perpendiculaire au plan de coupe respectif des formes de réalisation illustrées.

Bien que la présente invention ait été décrite précédemment complètement et à titre d'exemple en se référant aux formes de réalisation actuellement préférées, l'homme de l'art appréciera que des variations et modifications très variées sont possibles dans le cadre des revendications. En particulier, l'homme de l'art appréciera que les caractéristiques individuelles d'une forme de réalisation peuvent être combinées au choix avec des caractéristiques d'autres formes de réalisation, en particulier l'homme de l'art appréciera également qu'en fonction du type de commande, c'est-à-dire une commande fluidique ou pneumatique, des adaptations correspondantes pourront être effectuées.

## Revendications

1. Appareil de chauffage, ventilation et/ou climatisation, ayant optionnellement un évaporateur (10) et comprenant une soufflante, un échangeur due chaleur pour chauffage ainsi qu'un dispositif de chauffage supplémentaire (14), le dispositif de chauffage supplémentaire (14) étant alimenté au moins partiellement en air qui n'est pas passé par l'échangeur de chaleur pour chauffage (12), **caractérisé en ce que** le dispositif de chauffage supplémentaire (14) est parcouru par un courant dans des directions différentes dans des modes de fonctionnement différents.

2. Appareil de chauffage, ventilation et/ou climatisation selon la revendication 1, dans lequel le dispositif de chauffage supplémentaire (14) est branché en parallèle au moins partiellement par rapport à l'échangeur de chaleur pour chauffage (12), du point de vue de la technique des fluides.

3. Appareil de chauffage, ventilation et/ou climatisation selon l'une quelconque des revendications précédentes, dans lequel le dispositif de chauffage supplémentaire (14) peut être parcouru effectivement au moins par sections dans des directions essentiellement opposées.

4. appareil de chauffage, ventilation et/ou climatisation, selon l'une quelconque des revendications précédentes, dans lequel le dispositif de chauffage supplémentaire (14) s'étend essentiellement parallèlement à l'échangeur de chaleur pour chauffage (12) ou essentiellement perpendiculairement à la direction d'écoulement qui s'y établirait en cas de défaillance du dispositif de chauffage supplémentaire (14).

5. Appareil de chauffage, ventilation et/ou climatisation selon l'une quelconque des revendications 1 à 3, dans lequel le dispositif de chauffage supplémentaire (14) s'étend essentiellement perpendiculairement à l'échangeur de chaleur pour chauffage (12) ou essentiellement parallèlement à la direction d'écoulement qui s'y établirait en cas de défaillance du dispositif de chauffage supplémentaire (14).

6. Appareil de chauffage, ventilation et/ou climatisation selon l'une quelconque des revendications 1 à 3, dans lequel le dispositif de chauffage supplémentaire (14) forme avec l'échangeur de chaleur pour chauffage (12) une configuration essentiellement en forme de V, et en particulier dans le cas de la présence d'un évaporateur optionnel (10), forme avec celui-ci et l'échangeur de chaleur pour chauffage (12) une configuration essentiellement en forme de N.

7. Appareil de chauffage, ventilation et/ou climatisation selon l'une quelconque des revendications précédentes, dans lequel le dispositif de chauffage supplémentaire (14) est monté mobile, en particulier de façon à pouvoir pivoter entre un agencement essentiellement parallèle et un agencement essentiellement perpendiculaire par rapport à l'échangeur de chaleur pour chauffage(12), ou entre une orientation essentiellement perpendiculaire par rapport à l'échangeur de chaleur pour chauffage (12) et une orientation essentiellement parallèle par rapport à une direction d'écoulement d'air qui s'y établirait en cas de défaillance du dispositif de chauffage supplémentaire (14).

8. Appareil de chauffage, ventilation et/ou climatisation selon l'une quelconque des revendications précédentes, dans lequel le dispositif de chauffage supplémentaire (14) est un dispositif de chauffage électrique, en particulier au moins un élément de chauffage à CTP.

## Claims

1. Heating, ventilating and/or air conditioning device, optionally with an evaporator (10), and a blower, a heat exchanger for heating and an additional heating device (14), wherein the additional heating device (14) is at least partially supplied with air that has not passed through the heating heat exchanger (12), **characterised in that** the additional heating device (14) has a current passing through it in different directions in different operating modes.

2. Heating, ventilating and/or air conditioning device according to claim 1, in which the additional heating device (14) is connected in parallel at least partially with respect to the heating heat exchanger (12), from a fluid technique point of view.

3. Heating, ventilating and/or air conditioning device according to any of the previous claims, in which the additional heating device (14) may effectively have sections passing through it in essentially opposite directions.

4. Heating, ventilating and/or air conditioning device according to any of the previous claims, in which the additional heating device (14) extends essentially in parallel to the heating heat exchanger (12) or essentially perpendicularly to the direction of the flow that would be established in the event of failure of the additional heating device (14).

5. Heating, ventilating and/or air conditioning device according to any of claims 1 to 3, in which the additional heating device (14) extends essentially perpendicularly to the heating heat exchanger (12) or essentially in parallel to the direction of the flow that would be established in the event of failure of the additional heating device (14).

6. Heating, ventilating and/or air conditioning device according to any of claims 1 to 3, in which the additional heating device (14) forms with the heating heat exchanger (12) a configuration that is essentially V shaped, and especially in the case where an optional evaporator (10) is present, forms with the latter and the heating heat exchanger (12) a configuration that is essentially N shaped.

7. Heating, ventilating and/or air conditioning device according to any of the previous claims, in which the additional heating device (14) has a mobile mounting, especially so as to pivot between a layout that is essentially perpendicular with respect to the heating heat exchanger (12), or between an orientation that is essentially perpendicular with respect to the heating heat exchanger (12) and an orientation that is essentially parallel with respect to a direction of air flow that would be established in the event of failure of the additional heating device (14).

8. Heating, ventilating and/or air conditioning device according to any of the previous claims, in which the additional heating device (14) is an electrical heating device, in particular a CTP heating element.

## Patentansprüche

1. Heizungs-, Lüftungs- und Klimagerät, das optional einen Verdampfer (10) hat sowie eine Gebläsevorrichtung, einen Heizungswärmeaustauscher und zusätzliches Heizgerät (14) besitzt, wobei das zusätzliche Heizgerät (14) mindestens teilweise mit einem Luftstrom versorgt wird, der nicht durch den Heizungswärmeaustauscher (12) gelangt, **dadurch gekennzeichnet, dass** das zusätzliche Heizgerät (14) in unterschiedlichen Betriebsarten von einem Luftstrom in unterschiedlichen Richtungen durchströmt wird.

2. Heizungs-, Lüftungs- und Klimagerät nach Anspruch 1, bei dem das zusätzliche Heizgerät (14) unter dem Gesichtspunkt der Medientechnik zumindest teilweise parallel zum Heizungswärmeaustauscher (12) angeschlossen ist.

3. Heizungs-, Lüftungs- und Klimagerät nach einem der vorhergehenden Ansprüche, bei dem das zusätzliche Heizgerät (14) effektiv zumindest abschnittweise in weitgehend gegenseitigen Richtungen durchströmt werden kann.

4. Heizungs-, Lüftungs- und Klimagerät nach einem der vorhergehenden Ansprüche, bei dem sich das zusätzliche Heizgerät (14) weitgehend parallel zum Heizungswärmeaustauscher (12) oder weitgehend senkrecht zu der Strömungsrichtung erstreckt, die sich dort beim Ausfall des zusätzlichen Heizgeräts (14) bilden würde.

5. Heizungs-, Lüftungs- und Klimagerät nach einem der Ansprüche 1 bis 3, bei dem das zusätzliche Heizgerät (14) weitgehend senkrecht zum Heizungswärmeaustauscher (12) oder weitgehend parallel zu der Strömungsrichtung erstreckt, die sich dort beim Ausfall des zusätzlichen Heizgeräts (14) bilden würde.

6. Heizungs-, Lüftungs- und Klimagerät nach einem der Ansprüche 1 bis 3, bei dem das zusätzliche Heizgerät (14) mit dem Heizungswärmeaustauscher (12) eine weitgehend V-förmige Konfiguration bildet und insbesondere bei Vorhandensein eines optionalen Verdampfers (10) mit diesem und dem Heizungswärmeaustauscher (12) eine weitgehend N-förmige Konfiguration bildet.

7. Heizungs-, Lüftungs- und Klimagerät nach einem der vorhergehenden Ansprüche, bei dem das zusätzliche Heizgerät (14) beweglich und insbesondere so angebracht ist, dass es zwischen einer weitgehend parallelen und einer weitgehend senkrechten Anordnung zum Heizungswärmeaustauscher (12) oder zwischen einer weitgehend senkrechten Anordnung zum Heizungswärmeaustauscher (12) und einer weitgehend parallelen Anordnung zur Richtung der Luftströmung geschwenkt werden kann, die sich dort beim Ausfall des zusätzlichen Heizgeräts (14) bilden würde.

8. Heizungs-, Lüftungs- und Klimagerät nach einem der vorhergehenden Ansprüche, bei dem das zusätzliche Heizgerät (14) ein elektrisches Heizgerät, insbesondere mindestens ein PTC-Heizelement ist.
